# EUROPÄISCHE PATENTSCHRIFT

(11) **EP 3 284 927 B1**
(45) Veröffentlichungstag und Bekanntmachung des Hinweises auf die Patenterteilung: **10.04.2019**
(21) Anmeldenummer: 17176755.1
(22) Anmeldetag: 20.06.2017
(51) Int. Cl.: F02B 75/04, F16C 7/06, F16K 11/00, F16K 15/00

(54) **PLEUEL MIT EINEM UMSCHALTVENTIL**
CONNECTING ROD WITH SWITCHING VALVE
BIELLE COMPRENANT UNE SOUPAPE D'INVERSION

(30) Priorität: 16.08.2016 DE 102016115192; 10.04.2017 DE 102017107694
(43) Veröffentlichungstag der Anmeldung: 21.02.2018
(73) Patentinhaber: ECO Holding 1 GmbH, 97828 Marktheidenfeld (DE)
(72) Erfinder: Jung, Christian, 15890 Eisenhüttenstadt (DE); Schulze, Dietmar, 35516 Münzenberg (DE); Wissler, Sebastian, 81827 München (DE)

(56) Entgegenhaltungen:
- EP-A1- 2 910 745
- DE-A1-102010 021 399
- DE-A1-102012 020 999
- DE-A1-102014 220 175
- US-A1- 2015 152 794

## Beschreibung

### Technisches Gebiet

Die Erfindung betrifft einen Pleuel mit einem Umschaltventil, insbesondere zum Steuern eines Hydraulikflüssigkeitsstroms eines Pleuels für eine Brennkraftmaschine mit variabler Verdichtung mit einer Exzenter-Verstelleinrichtung zur Verstellung einer effektiven Pleuelstangenlänge.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt.

Ein Umschaltventil für einen Pleuel für eine Brennkraftmaschine mit variabler Verdichtung mit einer Exzenter-Verstelleinrichtung zur Verstellung einer effektiven Pleuelstangenlänge ist beispielsweise aus der DE 10 2012 112 461 A1 bekannt.

Weitere Pleuel für eine Brennkraftmaschine mit variabler Verdichtung mit einer Exzenter-Verstelleinrichtung zur Verstellung einer effektiven Pleuelstangenlänge sind der DE 10 2012 020 999 A1 sowie der US 2015/0152794 A1 zu entnehmen. Die Pleuel weisen jeweils ein Umschaltventil sowie im Pleuel angeordnete Rückschlagventile auf.

### Offenbarung der Erfindung

Eine Aufgabe der Erfindung ist es, einen Pleuel mit einem Umschaltventil bereitzustellen, welches ein ungewolltes Ändern der Stellung des Pleuels verhindert.

Die vorgenannte Aufgabe wird nach einem Aspekt der Erfindung gelöst mit den Merkmalen des unabhängigen Anspruchs 1.

Günstige Ausgestaltungen und Vorteile der Erfindung ergeben sich aus den weiteren Ansprüchen, der Beschreibung und der Zeichnung.

Es wird ein Pleuel für eine Brennkraftmaschine mit variabler Verdichtung vorgeschlagen, mit einer Exzenter-Verstelleinrichtung zur Verstellung der effektiven Pleuelstangenläge, wobei die Exzenter-Verstelleinrichtung zwei Zylinder aufweist und wobei sowohl jeweils ein Zulauf zum Zuführen von Hydraulikflüssigkeit in die Zylinder über eine Versorgungsleitung als auch jeweils ein Ablauf zum Abführen von Hydraulikflüssigkeit von den Zylindern vorgesehen sind. Die Exzenter-Verstelleinrichtung weist einen mit einem Exzenterhebel zusammenwirkenden Exzenter auf, mit zwei Kolben, welche jeweils in dem Zylinder verschiebbar geführt sind und in welchen an dem Exzenterhebel angreifende Exzenterstangen der Exzenter-Verstelleinrichtung gelagert sind. Den Zylindern ist jeweils wenigstens ein Rückschlagventil zugeordnet, welches ein Zuleiten von Hydraulikflüssigkeit über den Zulauf zu den Zylindern ermöglicht und ein Entleeren der Zylinder verhindert. Der Pleuel weist ein Umschaltventil zum Steuern eines Hydraulikflüssigkeitsstroms eines Pleuels für eine Brennkraftmaschine mit variabler Verdichtung mit einer Exzenter-Verstelleinrichtung zur Verstellung einer effektiven Pleuelstangenlänge, mit einem Abgriffselement und mit einem Ventilgehäuse auf, das einen ersten Arbeitsanschluss und einen zweiten Arbeitsanschluss sowie einen Versorgungsanschluss aufweist, der mit einem hydraulischen Druck der Hydraulikflüssigkeit beaufschlagbar ist. Das Abgriffselement ist in dem Ventilgehäuse angeordnet und wahlweise in eine erste Schaltstellung oder eine zweite Schaltstellung verlagerbar, wobei in der ersten Schaltstellung der erste Arbeitsanschluss und in der zweiten Schaltstellung der zweite Arbeitsanschluss mit dem Versorgungsanschluss oder einem Tank verbunden ist. Erfindungsgemäß ist ein weiteres Rückschlagventil im Abgriffselement vorgesehen, welches eine Hydraulikfluidströmung von dem zweiten Arbeitsanschluss zu dem ersten Arbeitsanschluss ermöglicht.

An dem ersten Arbeitsanschluss des erfindungsgemäßen Umschaltventils kann ein erster Zylinder als hydraulische Stützkammer eines verstellbaren Pleuels, beispielsweise der Zylinder auf einer Massenkraftseite (MKS) des Pleuels, angeschlossen sein und an dem zweiten Arbeitsanschluss kann ein zweiter Zylinder als hydraulische Stützkammer, beispielsweise der Zylinder auf der Gaskraftseite (GKS) des Pleuels angeschlossen sein. Die entsprechenden Kammern werden üblicherweise als MKS-Kammer bzw. GKS-Kammer bezeichnet.

Wie nachfolgend beschrieben ist, ist erfindungsgemäß im Umschaltventil ein weiteres Rückschlagventil vorgesehen, welches ein Entleeren des zugeordneten Zylinders und die Zuleitung der Hydraulikflüssigkeit in den anderen Zylinder ermöglicht. Das weitere Rückschlagventil kann vorteilhaft direkt im Abgriffselement des Umschaltventils angeordnet sein.

Das Abgriffselement ist in einer Bohrung des Ventilgehäuses verschiebbar angeordnet und wahlweise in die erste Schaltstellung oder die zweite Schaltstellung verlagerbar, wobei in der ersten Schaltstellung der Ablauf des ersten Zylinders und in der zweiten Schaltstellung der Ablauf des zweiten Zylinders mit dem Umschaltventil verbunden ist. Hydraulikflüssigkeit aus dem Ablauf des zweiten Zylinders kann dabei in der zweiten Schaltstellung des Umschaltventils erfindungsgemäß von dem zweiten Arbeitsanschluss des Umschaltventils über das Rückschlagventil zum ersten Arbeitsanschluss geleitet werden und so zum Füllen des ersten Zylinders genutzt werden. Damit wird vorteilhaft vermieden, dass die Hydraulikflüssigkeit erst über den Versorgungsanschluss des Umschaltventils, welcher in eine Versorgungsleitung zu einem Tank mündet, zurückgeführt werden muss und erst wieder über die Versorgungsleitung aus dem Tank dem ersten Zylinder zugeführt werden kann.

Vorteilhaft kann so in der zweiten Schaltstellung des Umschaltventils Hydraulikflüssigkeit beispielsweise aus der GKS-Kammer des Pleuels über den zweiten Arbeitsanschluss und weiter über das sich öffnende Rückschlagventil in eine Öffnung des Abgriffselements ablaufen und der MKS-Kammer des Pleuels über den ersten Arbeitsanschluss zugeführt werden. In Richtung der GKS-Kammer dagegen sperrt das Rückschlagventil, so dass die MKS-Kammer gegen eine Entleerung gesperrt ist. Auf diese Weise ist eine schnelle Befüllung der MKS-Kammer möglich.

Gleichzeitig kann überschüssige Hydraulikflüssigkeit, wenn das Volumen der GKS-Kammer größer als das Volumen der MKS-Kammer ist, über den Versorgungsanschluss in Richtung Versorgungsleitung gedrosselt ablaufen.

Die Zufuhr an Hydraulikflüssigkeit in die MKS-Kammer über den ersten Arbeitsanschluss des Umschaltventils kann dabei günstigerweise gedrosselt erfolgen, um eine stabile Funktion der Exzenter-Verstelleinrichtung zu erreichen. Die Drosselung des ersten Arbeitsänschlusses kann zweckmäßigerweise auch erst nach dem Umschaltventil erfolgen.

In der ersten Schaltstellung des Umschaltventils dageben sperrt das Rückschlagventil in Richtung der GKS-Kammer, so dass Hydraulikflüssigkeit aus der MKS-Kammer nicht direkt in die GKS-Kammer des Pleuels geleitet werden kann, sondern erst in den Versorgungsanschluss des Umschaltventils und damit in die Versorgungsleitung des Pleuels gedrosselt abgeleitet wird. Die GKS-Kammer kann dann nur über ein Nachfördern von Hydraulikflüssigkeit über die Versorgungsleitung aus dem Tank befüllt werden.

Die erste Schaltstellung entspricht bei dieser Verschaltung des Umschaltventils mit der Exzenter-Verstelleinrichtung einer Stellung hoher Verdichtung (ε_{high}) des Pleuels, während die zweite Schaltstellung einer Stellung niedriger Verdichtung (ε_{low}) des Pleuels entspricht.

Erfindungsgemäß ist das Rückschlagventil im Abgriffselement vorgesehen. Auf diese Weise ist eine günstige Verschaltung des Rückschlagventils mit den Arbeitsanschlüssen des Umschaltventils möglich, da die Anschlüsse des Rückschlagventils mit dem Abgriffselement eingestellt werden. So ergibt sich ein sehr kompakter Aufbau des Umschaltventils, was den Platzbedarf des Umschaltventils in einem Pleuel reduziert.

Gemäß einer vorteilhaften Ausgestaltung kann eine Öffnungsrichtung des weiteren Rückschlagventils in Längsrichtung des Abgriffselements ausgerichtet sein. Eine solche Ausrichtung kann die Funktion des Rückschlagventils im Betrieb günstig beeinflussen, da die Richtung des Öffnens und Schließens des Rückschlagventils durch die axiale Bewegung des Abgriffselements unterstützt werden kann. Auch ist so ein mögliches Verklemmen des Rückschlagventils durch die häufige Bewegung des Abgriffselements eher unwahrscheinlich.

Gemäß einer vorteilhaften Ausgestaltung kann das Rückschlagventil einen im Abgriffselement befestigten Deckel sowie ein vorgespanntes Schließelement, insbesondere ein mit einer Feder federbeaufschlagtes Schließelement, umfassen. Das Schließelement kann beispielsweise eine Kugel oder ein Schieber sein, welches von der Feder in einen Ventilsitz gedrückt wird und in Gegenrichtung durch Druck der Hydraulikflüssigkeit geöffnet werden kann. Das Rückschlagventil kann so vorteilhaft in einer Bohrung des Abgriffselements montiert werden und mit dem Deckel als Abschluss zum Abgriffselement sicher in seiner vorgespannten Position des Schließelements fixiert werden.

Gemäß einer vorteilhaften Ausgestaltung kann die Hydraulikfluidströmung zu dem Versorgungsanschluss über eine Drosselstelle erfolgen. Gerade bei hohem Druck in einem der Zylinder ist es von Vorteil, wenn die Hydraulikflüssigkeit gedrosselt über den Versorgungsanschluss abfließen kann. So wird das Volumen des Zylinders nicht zu schnell entleert. Insbesondere kann aus dem zweiten Arbeitsanschluss ein wesentliches Volumen der Hydraulikflüssigkeit über das Rückschlagventil zu dem ersten Arbeitsanschluss fließen und so den angeschlossenen ersten Zylinder möglichst schnell befüllen.

Gemäß einer vorteilhaften Ausgestaltung kann das Abgriffselement mittels eines mit einem Federelement beaufschlagten Rastelements in wenigstens einer Rastnut verrastbar sein. Auf diese Weise lassen sich die beiden Schaltstellungen des Umschaltventils günstig realisieren. Über das Rastelement ist eine zuverlässige Funktion des Abgriffselements sicherzustellen. Auch ist so eine einfache Aufbauweise des Umschaltventils zu erreichen, was die Montage des Umschaltventils begünstigt.

Gemäß einer vorteilhaften Ausgestaltung kann das Rastelement im Ventilgehäuse und die wenigstens eine Rastnut im Abgriffselement angeordnet sein. Dadurch lässt sich die Montage des Abgriffselements im Ventilgehäuse vereinfachen, da zuerst das federbeaufschlagte Rastelement im Ventilgehäuse angeordnet werden kann und dann das Abgriffselement mit der Rastnut über das Rastelement geschoben werden kann. So kann das Umschaltventil auf einfache Weise montiert werden.

Gemäß einer vorteilhaften Ausgestaltung kann ein Verschiebeweg des Abgriffselements mittels eines in einer Nut geführten Rastpins begrenzbar sein. Der Rastpin stellt eine einfache Möglichkeit dar, die axiale Bewegung des Abgriffselements einzuschränken, um so die beiden Schaltstellungen des Umschaltventils zu realisieren. Auf diese Weise kann auch das Abgriffselement zuerst im Ventilgehäuse montiert und danach der Rastpin in die Nut eingeführt und fixiert werden, was die Montage des Umschaltventils geeignet begünstigt.

Gemäß einer vorteilhaften Ausgestaltung kann der Rastpin im Ventilgehäuse und die Nut im Abgriffselement angeordnet sein. In dieser Ausführungsform kann der Rastpin auch nach Montage des Abgriffselement in das Ventilgehäuse eingesetzt und fixiert werden. Die axiale Bewegung des Abgriffselements kann so auf geeignete Weise beschränkt werden.

An dem ersten Arbeitsanschluss des Umschaltventils kann ein erster Zylinder als hydraulische Stützkammer des verstellbaren Pleuels, beispielsweise der Zylinder auf einer Massenkraftseite (MKS) des Pleuels, angeschlossen sein und an dem zweiten Arbeitsanschluss kann der zweite Zylinder als hydraulische Stützkammer, beispielsweise der Zylinder auf der Gaskraftseite (GKS) des Pleuels angeschlossen sein.

Mit dem Umschaltventil lässt sich eine sichere Befüllung der MKS-Kammer direkt aus dem Volumen der GKS-Kammer erreichen. Auch wird vermieden, dass der Pleuel unter bestimmten Betriebsbedingungen seine Stellung von der Stellung niedriger Verdichtung ungewollt in die Stellung hoher Verdichtung verändert. Gerade bei höheren Drehzahlen der Brennkraftmaschine kann es vorkommen, dass bei geschleppter Brennkraftmaschine die MKS-Kammer nicht mehr sicher über ein Rückschlagventil vor der MKS-Kammer aus der Versorgungsleitung der Hydraulikflüssigkeit befüllt werden kann, da bei steigenden Drehzahlen die Massen- und Druckkräfte für ein Öffnen des Rückschlagventils immer ungünstiger werden. Die MKS-Kammer kann sich durch Leckage entleeren, aber aufgrund des Nichtöffnens des Rückschlagventils nicht mehr befüllt werden. Ein Rückschlagventil vor der GKS-Kammer unterliegt nicht diesen Bedingungen, so dass sich die GKS-Kammer langsam befüllt. Aufgrund fehlender Gaskräfte, es wirken nur noch Massenkräfte, entleert sich diese nicht mehr.

Durch das Umschaltventil mit integriertem Rückschlagventil kann diese Situation umgangen werden, da erfindungsgemäß die MKS-Kammer direkt aus dem Volumen der Hydraulikflüssigkeit der GKS-Kammer befüllt werden kann. Das Rückschlagventil verhindert dabei vorteilhaft, dass sich die MKS-Kammer darüber wieder in die GKS-Kammer zurück entleeren kann.

Gemäß einer vorteilhaften Ausgestaltung kann das Umschaltventil so angeordnet sein, dass die Längsrichtung des Abgriffselements parallel zu einer Pleuelaugenachse eines Pleuelauges ausgerichtet ist. In einer solchen Anordnung erfolgt die Bewegung des Abgriffselements parallel zur Pleuelaugenachse und wenn das Rückschlagventil mit seiner Öffnungsrichtung auch parallel zur Pleuelaugenachse. Damit kann die lineare Bewegung sowohl des Abgriffselements als auch des Schließelements des Rückschlagventils unbeeinträchtigt von der Bewegung des Pleuels erfolgen. Beide Elemente erfahren so keine zusätzlichen Kräfte über das Pleuel, welche eine Bewegung in die eine oder die andere Richtung unterstützen würden.

Gemäß einer vorteilhaften Ausgestaltung kann das Umschaltventil so angeordnet sein, dass die Längsrichtung des Abgriffselements schräg zu einer Pleuelaugenachse eines Pleuelauges ausgerichtet ist. In einer alternativen Ausgestaltung kann die Bewegung des Abgriffselements sowie des Schließelements des Rückschlagventils schräg, insbesondere senkrecht, zur Pleuelaugenachse erfolgen. Damit kann die Bewegung des Abgriffselements durch die Trägheitskraft wenigstens teilweise unterstützt oder gehemmt werden. Ebenso kann ein Öffnen oder Schließen des Rückschlagventils durch die Trägheit des Schließelements, je nach Bewegungsrichtung des Pleuels, wenigstens teilweise unterstützt oder gehemmt werden.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Umschaltventil eines erfindungsgemäßen Pleuels in Seitenansicht;
- Fig. 2: das Umschaltventil aus Fig. 1 in einer um 90° gedrehten Seitenansicht;
- Fig. 3: das Umschaltventil aus Fig. 1 in einem Querschnitt mit eingezeichneten Schnittebenen G-G, H-H;
- Fig. 4: das Umschaltventil im Längsschnitt G-G in Fig. 3;
- Fig. 5: das Umschaltventil im Längsschnitt H-H in Fig. 3;
- Fig. 6: das Umschaltventil aus Fig. 1 in einer zweiten Schaltstellung, in einer Seitenansicht mit eingezeichneten Schnittebenen A-A, B-B, C-C;
- Fig. 7: das Umschaltventil im Längsschnitt A-A in Fig. 6;
- Fig. 8: das Umschaltventil im Querschnitt B-B in Fig. 6;
- Fig. 9: das Umschaltventil im Querschnitt C-C in Fig. 6;
- Fig. 10: das Umschaltventil aus Fig. 1 in einer ersten Schaltstellung, in einer Seitenansicht mit eingezeichneten Schnittebenen A-A, D-D;
- Fig. 11: das Umschaltventil im Längsschnitt A-A in Fig. 10 mit eingezeichneter Schnittebene F-F;
- Fig. 12: das Umschaltventil im Querschnitt D-D in Fig. 10;
- Fig. 13: das Umschaltventil in der ersten Schaltstellung in einer anderen Seitenansicht mit eingezeichneter Schnittebene E-E;
- Fig. 14: das Umschaltventil im Querschnitt E-E in Fig. 13;
- Fig. 15: das Umschaltventil im Querschnitt F-F in Fig. 11;
- Fig. 16: einen erfindungsgemäßen Pleuel in Vorderansicht; und
- Fig. 17: ein hydraulischer Schaltplan eines erfindungsgemäßen Pleuels.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

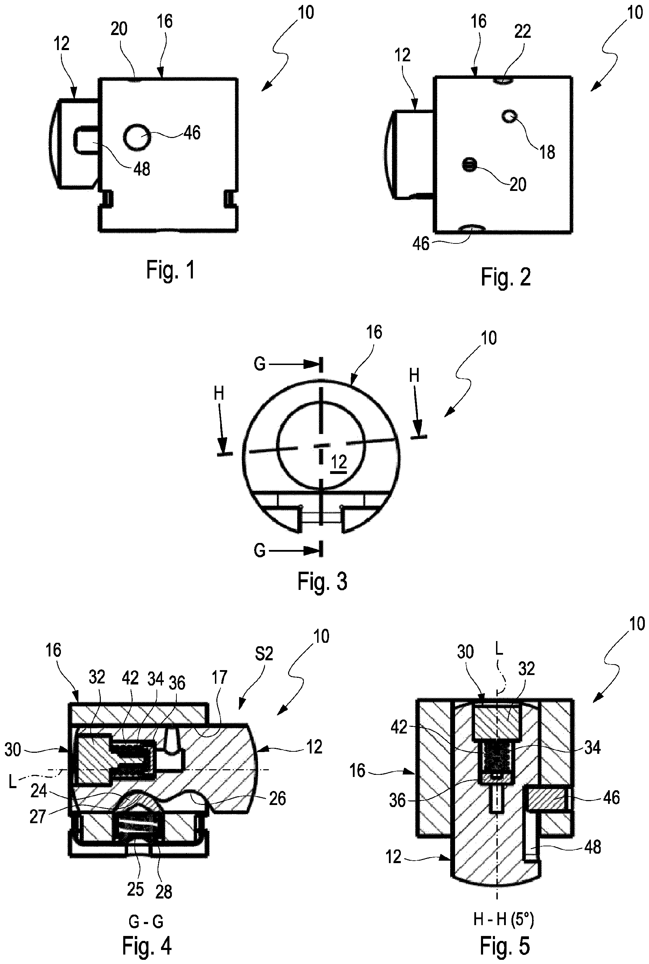

Figur 1 zeigt ein erfindungsgemäßes Umschaltventil 10 in einer Seitenansicht, während Figur 2 das Umschaltventil 10 in einer um 90° gedrehten Seitenansicht zeigt. In Figur 3 ist das Umschaltventil 10 in einem Querschnitt mit den eingezeichneten Schnittebenen G-G, H-H dargestellt. Die Längsschnitte G-G und H-H sind in Figur 4, bzw. Figur 5 dargestellt.

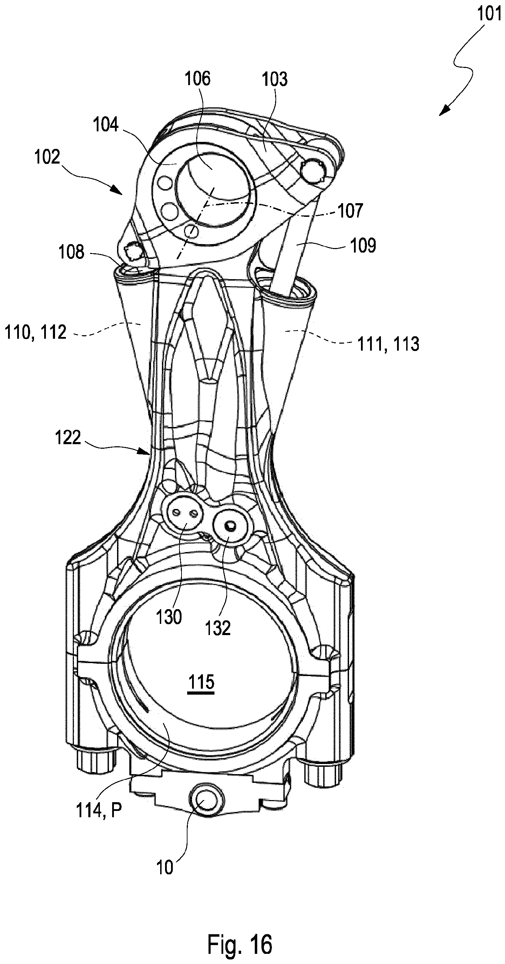

Das Umschaltventil 10 ist insbesondere zum Steuern eines Hydraulikflüssigkeitsstroms eines Pleuels 101 für eine Brennkraftmaschine mit variabler Verdichtung mit einer Exzenter-Versteileinrichtung 102 zur Verstellung einer effektiven Pleuelstangenlänge, wie in Figur 16 dargestellt, vorgesehen.

Das Umschaltventil 10 weist ein Abgriffselement 12 in einem Ventilgehäuse 16 auf, das einen ersten Arbeitsanschluss 18 und einen zweiten Arbeitsanschluss 20 sowie einen Versorgungsanschluss 22 aufweist, der mit einem hydraulischen Druck der Hydraulikflüssigkeit beaufschlagbar ist. Die Arbeitsanschlüsse 18, 20 sowie der Versorgungsanschluss 22 sind in Figur 2 auf der Außenseite des Ventilgehäuses 16 zu erkennen.

Das Abgriffselement 12 ist in einer Bohrung 17 des Ventilgehäuses 16 verschiebbar angeordnet und wahlweise in eine erste Schaltstellung S1 oder eine zweite Schaltstellung S2 verlagerbar, wobei in der ersten Schaltstellung S1 der erste Arbeitsanschluss 18 und in der zweiten Schaltstellung S2 der zweite Arbeitsanschluss 20 mit dem Versorgungsanschluss 22 oder alternativ mit einem Tank wie z.B. dem Kurbelgehäuse verbunden ist.

Figur 3 zeigt das Abgriffselement 12 in seiner Führung im Ventilgehäuse 16 im Querschnitt.

Wie in Figur 4 zu erkennen, wird das Abgriffselement 12 mittels eines Rastelementes 24 und einem Federelement 25 in einer der beiden Schaltstellungen S1, S2 arretiert, wobei das Rastelement 24 und das Federelement 25 mit in dem Abgriffselement 12 ausgebildeten Rastnuten 26, 27 zusammenwirken. Das Rastelement 24 ist im Ventilgehäuse 16 und die Rastnuten 26, 27 sind im Abgriffselement 12 angeordnet. Wie ersichtlich, ist dabei das Rastelement 24 mittels des Federelementes 25 in Richtung Abgriffselement 12 vorgespannt. Rastelement 24 und Federelement 25 sind mit einem Federhalter 28 in Form eines Clips in dem Ventilgehäuse 16 fixiert. Insgesamt sind zwei Rastnuten 26, 27 vorgesehen, so dass jeweils eine Rastnut 26, 27 zur Aufnahme des Rastelementes 24 für die erste sowie die zweite Schaltstellung S1, S2 des Umschaltventils 10 vorgesehen ist. In Figur 4 ist das Rastelement 24 in der Rastnut 27 verrastet, das Abgriffselement 12 ist damit in der zweiten Schaltstellung S2 arretiert.

Wie in Figur 5 ersichtlich, ist ein Verschiebeweg des Abgriffselements 12 mittels eines in einer Nut 48 geführten Rastpins 46 begrenzbar. Der Rastpin 46 ist dabei im Ventilgehäuse 16 und die Nut 48 im Abgriffselement 12 angeordnet. Alternativ könnte jedoch auch der Rastpin 46 im Abgriffselement 12 und die Nut 48 im Ventilgehäuse 16 angeordnet sein.

Erfindungsgemäß ist im Abgriffselement 12 ein Rückschlagventil 30 vorgesehen, welches eine Hydraulikfluidströmung von dem zweiten Arbeitsanschluss 20 zu dem ersten Arbeitsanschluss 18 ermöglicht. Das Rückschlagventil 30 könnte alternativ jedoch auch direkt im Ventilgehäuse 16 angeordnet sein.

Wie in den Längsschnitten in den Figuren 4 und 5 zu erkennen ist, umfasst das Rückschlagventil 30 einen im Abgriffselement 12 befestigten Deckel 32 sowie ein mit einer Feder 34 federbeaufschlagtes Schließelement 36 in Form einer Schließplatte. Auch eine Kugel kann als Schließelement 36 eingesetzt werden. Dabei ist eine Öffnungsrichtung des Rückschlagventils 30 in Längsrichtung L des Abgriffselements 12 ausgerichtet.

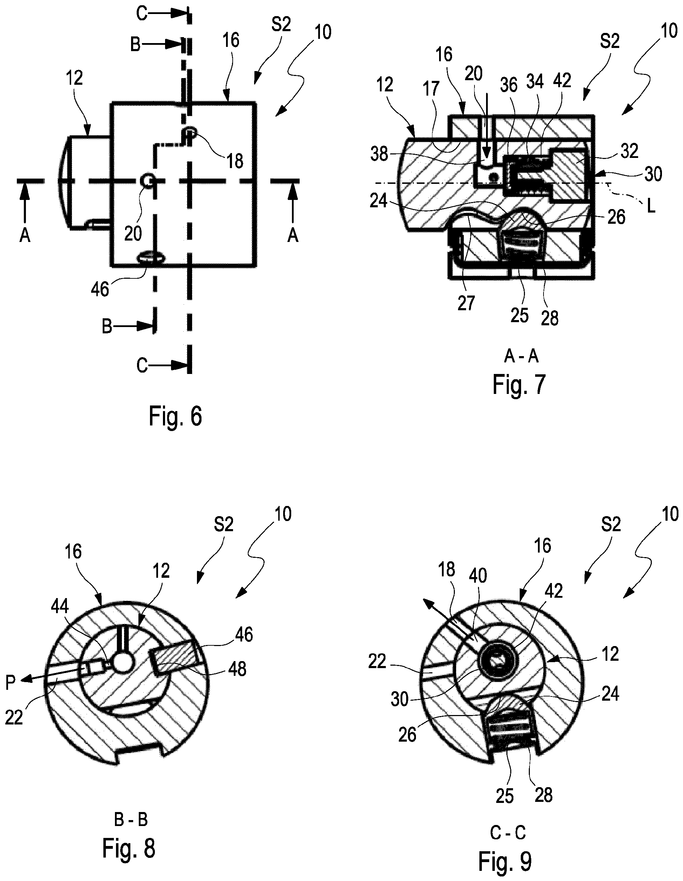

Figur 6 zeigt das Umschaltventil 10 aus Figur 1 in einer zweiten Schaltstellung S2, in einer Seitenansicht mit den eingezeichneten Schnittebenen A-A, B-B, C-C. Der Längsschnitt A-A, sowie die Querschnitte B-B und C-C in Figur 6 sind jeweils in den Figuren 7, 8 und 9 dargestellt. Die Schaltstellung S2 entspricht dabei beispielsweise einer Stellung niedriger Verdichtung (ε_{low}), wenn das Umschaltventil 10 in einem Pleuel eingesetzt ist.

Wie durch die Pfeile, welche den Hydraulikfluss symbolisieren, in den Figuren 7 bis 9 angedeutet, kann dabei Hydraulikflüssigkeit aus einem angeschlossenen Zylinder mittels Bohrungen im Abgriffselement 12 und im Ventilgehäuse 16 über den zweiten Arbeitsanschluss 20 sowie eine Bohrung 38 und weiter über das sich öffnende Rückschlagventil 30 in eine Öffnung 42 des Abgriffselements 12 ablaufen (siehe Figur 7). Einem anderen Zylinder kann dann die Hydraulikflüssigkeit über eine Bohrung 40 im Abgriffselement 12 und über den ersten Arbeitsanschluss 18 zugeführt werden (siehe Firgur 9). Gleichzeitig läuft die Hydraulikflüssigkeit über den Versorgungsanschluss 22 in Richtung Versorgungsleitung P über eine Drosselstelle 44 gedrosselt ab (siehe Figur 8). Die Drosselstelle 44 ist dabei im Abgriffselement 12 vorgesehen.

In umgekehrter Flussrichtung sperrt das Rückschlagventil 30, so dass ein angeschlossener Zylinder gegen eine Entleerung gesperrt ist.

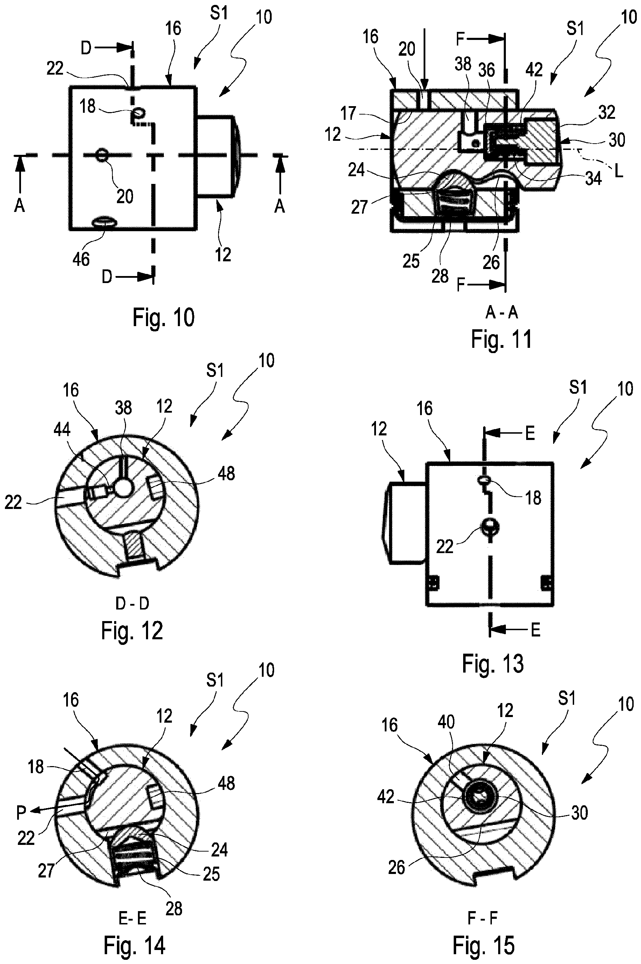

Figur 10 zeigt das Umschaltventil 10 in einer ersten Schaltstellung S1, in einer Seitenansicht mit den eingezeichneten Schnittebenen A-A, D-D. Der Längsschnitt A-A in Figur 10 mit eingezeichneter Schnittebene F-F ist in Figur 11 dargestellt, während der Querschnitt D-D in Figur 10 in Figur 12 gezeigt ist. Figur 13 zeigt das Umschaltventil 10 in der ersten Schaltstellung S1 in einer anderen Seitenansicht mit eingezeichneter Schnittebene E-E, wobei der Querschnitt E-E in Figur 14 und der Querschnitt F-F in Figur 15 dargestellt ist. Die Schaltstellung S1 entspricht dabei beispielsweise einer Stellung hoher Verdichtung (ε_{high}), wenn das Umschaltventil 10 in einem Pleuel eingesetzt ist.

Wie durch die Pfeile, welche den Hydraulikfluss symbolisieren, in den Figuren 11 und 14 angedeutet ist, ist der Abfluss aus der GKS-Kammer über den zweiten Arbeitsanschluss 20 gesperrt, die MKS-Kammer kann sich dagegen über den ersten Arbeitsanschluss 18 und den Versorgungsanschluss 22 in Richtung Versorgungsleitung P entleeren.

Das Rückschlagventil 30 wird in dieser Schaltstellung S1 nicht benötigt, so dass alle Bohrungen 38 (Figur 11, 12), 40 (Figur 15) im Abgriffselement 12, welche dem Rückschlagventil 30 zugeordnet sind, gesperrt sind.

Figur 16 zeigt einen erfindungsgemäßen Pleuel 100 für eine Brennkraftmaschine mit variabler Verdichtung in Vorderansicht. Der Pleuel 100 weist eine Exzenter-Verstelleinrichtung 102 auf, welche zur Verstellung einer effektiven Pleuelstangenlänge dient.

Die Exzenter-Versteileinrichtung 102 weist zwei Zylinder 110, 111 auf. Es sind sowohl jeweils ein (nicht sichtbarer) Zulauf zum Zuführen von Hydraulikflüssigkeit in die Zylinder 110, 111 über eine Versorgungsleitung P als auch jeweils ein (nicht sichtbarer) Ablauf zum Abführen von Hydraulikflüssigkeit von den Zylindern 110, 111 vorgesehen. Die Exzenter-Versteileinrichtung 102 weist einen mit einem Exzenterhebel 103 zusammenwirkenden Exzenter 104 auf, mit zwei Kolben 112, 113, welche jeweils in dem Zylinder 110, 111 verschiebbar geführt sind und in welchen an dem Exzenterhebel 103 angreifende Exzenterstangen 108, 109 der Exzenter-Versteileinrichtung 102 gelagert sind. Der Exzenter 104 ist im Pleuelauge 106 mit seiner Pleuelaugenachse 107 angeordnet.

Den Zylindern 110, 111 ist jeweils ein Rückschlagventil 130, 132 zugeordnet, welches ein Zuleiten von Hydraulikflüssigkeit über den Zulauf zu den Zylindern 110, 111 ermöglicht und ein Entleeren der Zylinder 110, 111 verhindert. Ein Verstellweg der Exzenter-Versteileinrichtung 102 ist mittels eines Umschaltventils 10 verstellbar. Zulauf und Ablauf eines Zylinders können auch jeweils als eine gemeinsame Hydraulikleitung ausgebildet sein.

Eine Verdrehung der verstellbaren Exzenter-Versteileinrichtung 102 wird durch Einwirken von Massen- und Lastkräften der Brennkraftmaschine initiiert, die bei einem Arbeitstakt der Brennkraftmaschine auf die Exzenter-Versteileinrichtung 102 wirken. Während eines Arbeitstaktes verändern sich die Wirkungsrichtungen der auf die Exzenter-Versteileinrichtung 102 wirkenden Kräfte kontinuierlich. Die Drehbewegung oder Verstellbewegung wird durch die mit Hydraulikflüssigkeit, insbesondere mit Motoröl, beaufschlagte, im Pleuel integrierte, nicht sichtbaren Kolben 112, 113 unterstützt, bzw. die Kolben 112, 113 verhindern ein Rückstellen der Exzenter-Versteileinrichtung 102 aufgrund variierender Kraftwirkungsrichtungen der auf die Exzenter-Versteileinrichtung 102 wirkenden Kräfte.

Die Kolben 112, 113 sind mittels der Exzenterstangen 108, 109 beidseitig mit dem Exzenterhebel 103 der Exzenter-Versteileinrichtung 102 wirkverbunden. Die Kolben 112, 113 sind in den Zylindern 110, 111 verschiebbar angeordnet und über Zuläufe im Pleuel 100 von einem Hublagerauge 115 oder einer anderen Druckquelle aus mit Hydraulikflüssigkeit über die Rückschlagventile 130, 132 beaufschlagt. Diese verhindern dabei ein Rückfließen der Hydraulikflüssigkeit aus den Zylindern 110, 111 zurück in die Zuläufe und in eine Lagerschale 114 des Hublagerauges 115 und ermöglichen ein Nachsaugen von Hydraulikflüssigkeit in die Zylinder 110, 111. Die Zylinder 110, 111 sind weiter mit Abläufen verbunden, welche mit einem oben beschriebenen Umschaltventil 10 zusammenwirken.

In einer ersten Schaltstellung S1 des Umschaltventils 10 ist der Ablauf des ersten Zylinders 110 und in einer zweiten Schaltstellung S2 der Ablauf des zweiten Zylinders 111 mit der Versorgungsleitung P verbunden, wobei im Umschaltventil 10 wenigstens ein Rückschlagventil 30 vorgesehen ist, welches ein Entleeren des zugeordneten Zylinders 111 und Zuleiten der Hydraulikflüssigkeit in den anderen Zylinder 110 ermöglicht.

Das Umschaltventil 10 ist vorteilhaft so angeordnet, dass die Längsrichtung L des Abgriffselements 12 parallel zu der Pleuelaugenachse 107 des Pleuelauges 106 ausgerichtet ist.

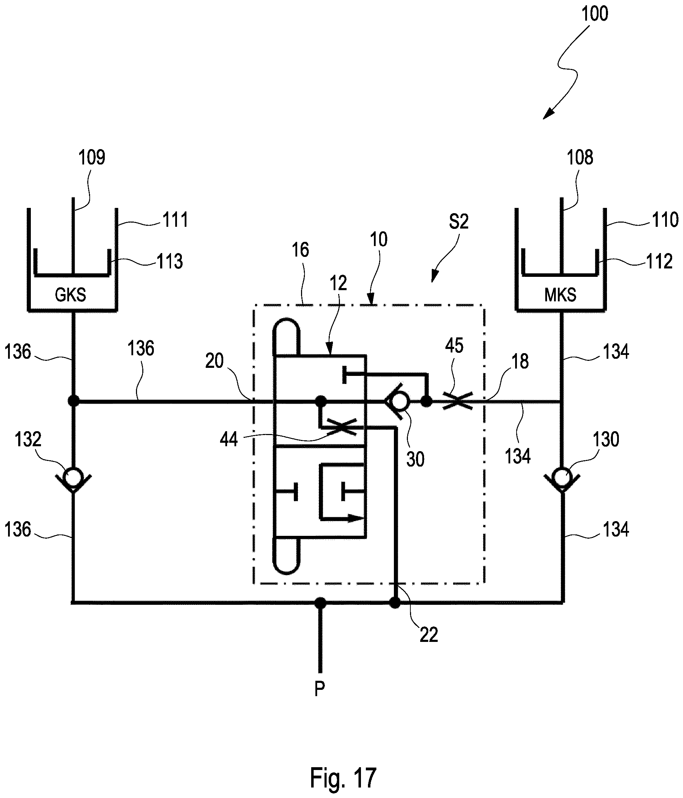

In Figur 17 ist dazu ein hydraulischer Schaltplan des erfindungsgemäßen Pleuels 100 dargestellt.

Der Pleuel 100 ist dabei mit den in den Zylindern 110, 111 geführten Kolben 112, 113 nur schematisch angedeutet.

Das Umschaltventil 10 umfasst das Abgriffselement 12 und das Ventilgehäuse 16, das den ersten Arbeitsanschluss 18 und den zweiten Arbeitsanschluss 20 sowie den Versorgungsanschluss 22 aufweist, der mit einem hydraulischen Druck der Hydraulikflüssigkeit beaufschlagbar ist.

Der erste Zylinder 110 ist mit einer Hydraulikleitung 134, welche als kombinierter Zulauf und Ablauf ausgebildet ist, mit dem ersten Arbeitsanschluss 18 des Umschaltventils 10 sowie über ein Rückschlagventil 130 mit der Versorgungsleitung P verbunden. Der zweite Zylinder 111 ist mit einer Hydraulikleitung 136, welche als kombinierter Zulauf und Ablauf ausgebildet ist, mit dem zweiten Arbeitsanschluss 20 des Umschaltventils 10 sowie über ein Rückschlagventil 132 mit der Versorgungsleitung P verbunden. Beide Zylinder 110, 111 können über die Rückschlagventile 130, 132 aus der Versorgungsleitung P mit Hydraulikflüssigkeit versorgt werden. Ein Rückfluss in die Versorgungsleitung P ist nur über das Umschaltventil 10 möglich, da in dieser Richtung die Rückschlagventile 130, 132 sperren.

Das Abgriffselement 12 ist in dem Ventilgehäuse 16 angeordnet und wahlweise in eine zweite Schaltstellung S2 (in Figur 17 dargestellt) oder eine erste Schaltstellung S1 verlagerbar, wobei in der zweiten Schaltstellung S2 der zweite Ablauf über die Hydraulikleitung 136 und in der ersten Schaltstellung S1 der erste Ablauf über die Hydraulikleitung 134 mit der Versorgungsleitung P verbunden ist. Im Umschaltventil 10 ist ein Rückschlagventil 30 vorgesehen, welches ein Entleeren des zugeordneten Zylinders 111 und Zuleiten der Hydraulikflüssigkeit in den anderen Zylinder 110 in der zweiten Schaltstellung S2 ermöglicht.

Wie in Figur 17 ersichtlich, kann in der zweiten Schaltstellung S2, welche der Stellung niedriger Verdichtung (ε_{low}) des Pleuels 100 entspricht, Hydraulikflüssigkeit aus dem zweiten Zylinder 111 über die Hydraulikleitung 136 in den zweiten Arbeitsanschluss 20 des Umschaltventils 10 strömen. Im Umschaltventil 10 strömt die Hydraulikflüssigkeit weiter über das Abgriffselement 12 und das Rückschlagventil 30 aus dem ersten Arbeitsanschluss 18 in die Hydraulikleitung 134 und kann so den ersten Zylinder 110 befüllen. Der Zufluss in den ersten Zylinder 110 erfolgt dabei über die Drosselstelle 45, um die Hydraulikströmung zu vergleichmäßigen. Ein Teil der Hydraulikflüssigkeit aus dem zweiten Zylinder 111 kann über die Drosselstelle 44 zum Versorgungsanschluss 22 und von dort in die Versorgungsleitung P abströmen. Dies ist insbesondere von Vorteil, wenn das Volumen des zweiten Zylinders 111 größer ist als das Volumen des ersten Zylinders 110. Auf Grund der Stellung der Rückschlagventile 30 und 130 kann die Hydraulikflüssigkeit aus dem ersten Zylinder 110 nicht mehr zurückfließen.

Wie an dem hydraulischen Schaltplan des Abgriffselements 12 zu erkennen ist, kann in der ersten Schaltstellung S1, wenn das Abgriffselement 12 in dem hydraulischen Schaltplan in Figur 17 nach oben geschoben wird und welche Schaltstellung S1 der Stellung hoher Verdichtung (ε_{high}) entspricht, Hydraulikflüssigkeit in den zweiten Zylinder 111 nur über das Rückschlagventil 132 aus der Versorgungsleitung P nachgefördert werden, da der zweite Arbeitsanschluss 20 dann durch das Abgriffselement 12 gesperrt ist. Hydraulikflüssigkeit aus dem ersten Zylinder 110 kann dagegen von der Hydraulikleitung 134 in den ersten Arbeitsanschluss 18, über die Drosselstelle 45 und über das Abgriffselement 12 aus dem Versorgungsanschluss 22 in die Versorgungsleitung P abgeführt werden, so dass der erste Zylinder 110 entleert werden kann.

## Patentansprüche

1. Pleuel (101) für eine Brennkraftmaschine mit variabler Verdichtung, mit einer Exzenter-Verstelleinrichtung (102) zur Verstellung der effektiven Pleuelstangenläge, wobei die Exzenter-Verstelleinrichtung (102) einen ersten Zylinder (110) und einen zweiten Zylinder (111) aufweist und wobei sowohl jeweils ein Zulauf zum Zuführen von Hydraulikflüssigkeit in die Zylinder (110, 111) über eine Versorgungsleitung (P) als auch jeweils ein Ablauf zum Abführen von Hydraulikflüssigkeit von den Zylindern (110, 111) vorgesehen sind, wobei die Exzenter-Verstelleinrichtung (102) einen mit einem Exzenterhebel (103) zusammenwirkenden Exzenter (104) aufweist, mit einem ersten Kolben (112) und einem zweiten Kolben (113), welche jeweils in den Zylindern (110, 111) verschiebbar geführt sind und in welchen an dem Exzenterhebel (103) angreifende Exzenterstangen (108, 109) der Exzenter-Verstelleinrichtung (102) gelagert sind, wobei den Zylindern (110, 111) jeweils ein Rückschlagventil (130, 132) zugeordnet ist, welches ein Zuleiten von Hydraulikflüssigkeit über den Zulauf zu den Zylindern (110, 111) ermöglicht und ein Entleeren der Zylinder (110, 111) verhindert,
wobei das Pleuel (101) ein Umschaltventil (10) zum Steuern eines Hydraulikflüssigkeitsstroms eines Pleuels (101) für eine Brennkraftmaschine mit variabler Verdichtung mit einer Exzenter-Verstelleinrichtung (102) zur Verstellung einer effektiven Pleuelstangenlänge, mit einem Abgriffselement (12) und mit einem Ventilgehäuse (16) aufweist, das einen ersten Arbeitsanschluss (18) und einen zweiten Arbeitsanschluss (20) sowie einen Versorgungsanschluss (22) aufweist, der mit einem hydraulischen Druck der Hydraulikflüssigkeit beaufschlagbar ist,
wobei das Abgriffselement (12) in dem Ventilgehäuse (16) angeordnet und wahlweise in eine erste Schaltstellung (S1) oder eine zweite Schaltstellung (S2) verlagerbar ist, wobei in der ersten Schaltstellung (S1) der erste Arbeitsanschluss (18) und in der zweiten Schaltstellung (S2) der zweite Arbeitsanschluss (20) mit dem Versorgungsanschluss (22) oder einem Tank verbunden ist,
**dadurch gekennzeichnet, dass** wenigstens ein weiteres Rückschlagventil (30) im Abgriffselement (12) vorgesehen ist, welches eine Hydraulikfluidströmung von dem zweiten Arbeitsanschluss (20) zu dem ersten Arbeitsanschluss (18) ermöglicht.

2. Pleuel (101) nach Anspruch 1, **dadurch gekennzeichnet, dass** eine Öffnungsrichtung des weiteren Rückschlagventils (30) in Längsrichtung (L) des Abgriffselements (12) ausgerichtet ist.

3. Pleuel (101) nach Anspruch 2, **dadurch gekennzeichnet, dass** das weitere Rückschlagventil (30) einen im Abgriffselement (12) befestigten Deckel (32) sowie ein vorgespanntes Schließelement (36), insbesondere ein mit einer Feder (34) federbeaufschlagtes Schließelement (36), umfasst.

4. Pleuel (101) nach einem der vorhergehenden Ansprüche, **dadurch gekennzeichnet, dass** die Hydraulikfluidströmung zu dem Versorgungsanschluss (22) über eine Drosselstelle (44) im Abgriffselement (12) erfolgt.

5. Pleuel (101) nach einem der vorhergehenden Ansprüche, **dadurch gekennzeichnet, dass** das Abgriffselement (12) mittels eines mit einem Federelement (25) beaufschlagten Rastelements (24) in wenigstens einer Rastnut (26, 27) verrastbar ist.

6. Pleuel (101) nach Anspruch 5, **dadurch gekennzeichnet, dass** das Rastelement (24) im Ventilgehäuse (16) und die wenigstens eine Rastnut (26, 27) im Abgriffselement (12) angeordnet sind.

7. Pleuel (101) nach einem der vorhergehenden Ansprüche, **dadurch gekennzeichnet, dass** ein Verschiebeweg des Abgriffselements (12) mittels eines in einer Nut (48) geführten Rastpins (46) begrenzbar ist.

8. Pleuel (101) nach Anspruch 7, **dadurch gekennzeichnet, dass** der Rastpin (46) im Ventilgehäuse (16) und die Nut (48) im Abgriffselement (12) angeordnet sind.

9. Pleuel (101) nach einem der vorhergehenden Ansprüche, wobei das Umschaltventil (10) so angeordnet ist, dass die Längsrichtung (L) des Abgriffselements (12) parallel zu einer Pleuelaugenachse (107) eines Pleuelauges (106) ausgerichtet ist.

10. Pleuel nach einem der vorhergehenden Ansprüche 1 bis 8, wobei das Umschaltventil (10) so angeordnet ist, dass die Längsrichtung (L) des Abgriffselements (12) schräg zu einer Pleuelaugenachse (107) eines Pleuelauges (106) ausgerichtet ist.

## Claims

1. Connecting rod (101) for an internal combustion engine with variable compression, having an eccentric adjusting device (102) for the adjustment of the effective connecting rod length, the eccentric adjusting device (102) having a first cylinder (110) and a second cylinder (111), and in each case one feed line for feeding hydraulic liquid into the cylinders (110, 111) via a supply line (P) and in each case one discharge line for discharging hydraulic liquid from the cylinders (110, 111) both being provided, the eccentric adjusting device (102) having an eccentric (104) which interacts with an eccentric lever (103), having a first piston (112) and a second piston (113) which are guided displaceably in each case in the cylinders (110, 111) and in which eccentric rods (108, 109) of the eccentric adjusting device (102) which act on the eccentric lever (103) are mounted, the cylinders (110, 111) being assigned in each case one check valve (130, 132) which enables a feed of hydraulic liquid via the feed line to the cylinders (110, 111) and prevents emptying of the cylinders (110, 111),
the connecting rod (101) having a switchover valve (10) for controlling a hydraulic liquid flow of a connecting rod (101) for an internal combustion engine with variable compression having an eccentric adjusting device (102) for the adjustment of an effective connecting rod length, having a tapping element (12) and having a valve housing (16) which has a first working connector (18), a second working connector (20) and a supply connector (22) which can be loaded with a hydraulic pressure of the hydraulic liquid,
the tapping element (12) being arranged in the valve housing (16), and it being possible for the tapping element (12) to be moved selectively into a first switching position (S1) or a second switching position (S2), the first working connector (18) being connected to the supply connector (22) or a tank in the first switching position (S1), and the second working connector (20) being connected to the supply connector (22) or a tank in the second switching position (S2), **characterized in that** at least one further check valve (30) is provided in the tapping element (12), which further check valve (30) enables a hydraulic fluid flow from the second working connector (20) to the first working connector (18).

2. Connecting rod (101) according to Claim 1, **characterized in that** an opening direction of the further check valve (30) is oriented in the longitudinal direction (L) of the tapping element (12).

3. Connecting rod (101) according to Claim 2, **characterized in that** the further check valve (30) comprises a cover (32), which is fastened in the tapping element (12), and a prestressed closing element (36), in particular a closing element (36) which is spring-loaded by way of a spring (34).

4. Connecting rod (101) according to one of the preceding claims, **characterized in that** the hydraulic fluid flow to the supply connector (22) takes place via a throttle point (44) in the tapping element (12).

5. Connecting rod (101) according to one of the preceding claims, **characterized in that** the tapping element (12) can be latched in at least one latching groove (26, 27) by means of a latching element (24) which is loaded by way of a spring element (25).

6. Connecting rod (101) according to Claim 5, **characterized in that** the latching element (24) is arranged in the valve housing (16), and the at least one latching groove (26, 27) is arranged in the tapping element (12).

7. Connecting rod (101) according to one of the preceding claims, **characterized in that** a displacement travel of the tapping element (12) can be limited by means of a latching pin (46) which is guided in a groove (48).

8. Connecting rod (101) according to Claim 7, **characterized in that** the latching pin (46) is arranged in the valve housing (16), and the groove (48) is arranged in the tapping element (12).

9. Connecting rod (101) according to one of the preceding claims, the switchover valve (10) being arranged in such a way that the longitudinal direction (L) of the tapping element (12) is oriented in parallel with a connecting rod eye axis (107) of a connecting rod eye (106).

10. Connecting rod according to one of the preceding Claims 1 to 8, the switchover valve (10) being arranged in such a way that the longitudinal direction (L) of the tapping element (12) is oriented obliquely with respect to a connecting rod eye axis (107) of a connecting rod eye (106).

## Revendications

1. Bielle (101) destinée à un moteur à combustion interne à compression variable, comprenant un dispositif de réglage excentrique (102) destiné à régler la longueur effective de la bielle, le dispositif de réglage excentrique (102) comportant un premier cylindre (110) et un deuxième cylindre (111) et une entrée étant prévue pour amener un liquide hydraulique dans chacun des cylindres (110, 111) par le biais d'une conduite d'alimentation (P) et une sortie étant prévue pour évacuer le liquide hydraulique de chacun des cylindres (110, 111), le dispositif de réglage excentrique (102) comportant un excentrique (104) coopérant avec un levier d'excentrique (103), un premier piston (112) et un deuxième piston (113) qui sont guidés de manière déplaçable dans les cylindres (110, 111) et dans lesquels sont montées des tiges d'excentrique (108, 109) du dispositif de déplacement excentrique (102) qui agissent sur le levier d'excentrique (103), chacun des cylindres (110, 111) est associé à une soupape anti-retour (130, 132) qui permet d'amener du liquide hydraulique par l'entrée aux cylindres (110, 111) et qui empêche la purge des cylindres (110, 111), la bielle (101) comportant une soupape de commutation (10) destinée à commander un écoulement de liquide hydraulique d'une bielle (101) destiné à un moteur à combustion interne à compression variable équipé d'un dispositif de réglage d'excentrique (102) destiné à régler la longueur effective de la tige de bielle, d'un élément de branchement (12) et d'un boîtier de soupape (16) qui comporte un premier raccord de travail (18) et un deuxième raccord de travail (20) ainsi qu'un raccord d'alimentation (22) qui peut être soumis à une pression hydraulique du liquide hydraulique, l'élément de branchement (12) étant disposé dans le boîtier de soupape (16) et pouvant être déplacé sélectivement dans une première position de commutation (S1) ou deuxième position de commutation (S2), le premier raccord de travail (18) étant relié dans la première position de commutation (S1), et le deuxième raccord de travail (20) étant relié dans la deuxième position de commutation (S2), au raccord d'alimentation (22) ou à un réservoir,
**caractérisé en ce qu'**au moins une autre soupape anti-retour (30) est prévue dans l'élément de branchement (12) qui permet un écoulement de fluide hydraulique du deuxième raccord de travail (20) au premier raccord de travail (18).

2. Bielle (101) selon la revendication 1, **caractérisée en ce que** la direction d'ouverture de l'autre soupape anti-retour (30) est orientée dans la direction longitudinale (L) de l'élément de branchement (12) .

3. Bielle (101) selon la revendication 2, **caractérisée en ce que** l'autre soupape anti-retour (30) comprend un capot (32) fixe dans l'élément de branchement (12) ainsi qu'un élément de fermeture précontraint (36), en particulier un élément de fermeture (36) précontraint par un ressort (34).

4. Bielle (101) selon l'une des revendications précédentes, **caractérisée en ce que** le liquide hydraulique s'écoule vers le raccord d'alimentation (22) par le biais d'un point d'étranglement (44) placé dans l'élément de branchement (12).

5. Bielle (101) selon l'une des revendications précédentes, **caractérisée en ce que** l'élément de branchement (12) peut s'encliqueter dans au moins une gorge d'encliquetage (26, 27) au moyen d'un élément d'encliquetage (24) soumis à un élément à ressort (25).

6. Bielle (101) selon la revendication 5, **caractérisée en ce que** l'élément d'encliquetage (24) est disposé dans le boîtier de soupape (16) et l'au moins une gorge d'encliquetage (26, 27) est disposée dans l'élément de prélèvement (12).

7. Bielle (101) selon l'une des revendications précédentes, **caractérisée en ce qu'**un chemin de déplacement de l'élément de branchement (12) peut être délimité au moyen d'une broche d'encliquetage (46) guidée dans une gorge (48).

8. Bielle (101) selon la revendication 7, **caractérisée en ce que** la broche d'encliquetage (46) est disposée dans le boîtier de soupape (16) et la gorge (48) est disposée dans l'élément de branchement (12) .

9. Bielle (101) selon l'une des revendications précédentes, la soupape de commutation (10) étant disposée de sorte que la direction longitudinale (L) de l'élément de branchement (12) soit orientée parallèlement à un axe (107) d'un oeil de bielle (106).

10. Bielle selon l'une des revendications précédentes 1 à 8, la soupape de commutation (10) étant disposée de sorte que la direction longitudinale (L) de l'élément de branchement (12) soit orientée obliquement par rapport à un axe (107) d'un oeil de bielle (106).
